# EUROPÄISCHE PATENTSCHRIFT

(11) **EP 2 683 927 B1**
(45) Veröffentlichungstag und Bekanntmachung des Hinweises auf die Patenterteilung: **25.02.2015**
(21) Anmeldenummer: 11788905.5
(22) Anmeldetag: 02.12.2011
(51) Int. Cl.: F02D 9/10, F02M 25/07, F16C 19/46, F16C 33/58, F16C 33/76, F16K 1/226

(54) **NADELHÜLSE, INSBESONDERE ZUR SCHWENKLAGERUNG DER DROSSELKLAPPENWELLE EINER REGELEINRICHTUNG ZUR ABGASRÜCKFÜHRUNG AN BRENNKRAFTMASCHINEN**
NEEDLE SLEEVE, IN PARTICULAR FOR PIVOTABLY MOUNTING THE THROTTLE VALVE SHAFT OF A CONTROL DEVICE FOR RECIRCULATING EXHAUST GAS IN INTERNAL COMBUSTION ENGINES
DOUILLE À AIGUILLES, DESTINÉE NOTAMMENT À CONSTITUER UN PALIER PIVOTANT QUI REÇOIT L'ARBRE DE PAPILLON D'UN DISPOSITIF DE RÉGLAGE DESTINÉ AU RECYCLAGE DES GAZ D'ÉCHAPPEMENT D'UN MOTEUR À COMBUSTION INTERNE

(30) Priorität: 10.03.2011 DE 102011005341
(43) Veröffentlichungstag der Anmeldung: 15.01.2014
(73) Patentinhaber: Schaeffler Technologies GmbH & Co. KG, 91074 Herzogenaurach (DE)
(72) Erfinder: FICK, Matthias, 91220 Schnaittach (DE); SCHÄFERS, Heinz, 91056 Erlangen (DE)
(86) Internationale Anmeldenummer: PCT/EP2011/071647
(87) Internationale Veröffentlichungsnummer: WO 2012/119671

(56) Entgegenhaltungen:
- EP-A1- 0 410 871
- EP-A1- 1 947 312
- WO-A1-2009/103378
- DE-A1- 1 450 051
- DE-A1-102006 053 716
- DE-U- 1 667 026
- US-A- 3 384 429
- US-A- 5 419 641

## Beschreibung

### Gebiet der Erfindung

Die Erfindung betrifft eine Nadelhülse nach den oberbegriffsbildenden Merkmalen des Patentanspruchs 1, welche insbesondere vorteilhaft zur Schwenklagerung der Drosselklappenwelle einer Regeleinrichtung zur Abgasrückführung an Brennkraftmaschinen geeignet ist.

### Hintergrund der Erfindung

Die Abgasrückführung an Brennkraftmaschinen ist gegenwärtig Bestandteil vieler Motorenkonzepte zur Erfüllung der vorgeschriebenen Emissionsgrenzwerte vor allem in Europa. Sie dient der Minderung von Stickstoffoxiden bei der Verbrennung von Kraftstoffen in Otto- und Dieselmotoren, indem ein Teil der Verbrennungsabgase gezielt zurück in den Brennraum der Brennkraftmaschine geführt werden. Derzeit wird zwischen zwei Methoden der Abgasrückführung an Brennkraftmaschinen unterschieden, nämlich zum einen einer internen Abgasrückführung durch Überschneidungen bei den Ventilöffnungszeiten mittels Nockenwellenverstellung oder variabler Ventiltriebe und zum anderen einer externen Abgasrückführung mittels einer Rückführungsleitung zwischen Abgas- und Ansaugtrakt und einer in der Rückführungsleitung angeordneten Regeleinrichtung zur Steuerung der Durchsatzrate.

Eine solche Regeleinrichtung zur externen Abgasrückführung an Brennkraftmaschinen ist beispielsweise aus der DE 10 2006 053 716 A1 bekannt und besteht im Wesentlichen aus einem Drosselklappengehäuse mit einem Gaskanal sowie einer den Gasdurchlass durch den Gaskanal regelnden Drosselklappe, die mit einer quer durch den Gaskanal verlaufenden und durch eine Stelleinrichtung verschwenkbaren Drosselklappenwelle verbunden ist. Die Drosselklappenwelle ist dabei beidseitig des Gaskanals in zwei im Drosselklappengehäuse angeordneten Drosselklappenlagern gelagert, wie sie ebenfalls aus der DE 10 2006 053 716 A1 vorbekannt sind. Derartige, als Nadelhülsen ausgebildete Drosselklappenlager bestehen im Wesentlichen aus einem dünnwandigen, spanlos geformten Außenring sowie aus einem in diesen Außenring eingesetzten Nadelkranz, der durch eine Vielzahl von Lagernadeln sowie einem die Lagernadeln in Umfangsrichtung in gleichmäßigen Abständen führenden Nadelkäfig gebildet wird. Dabei weist der Außenring an seiner einen Axialseite einen bei dessen Herstellung angeformten, radial nach innen gerichteten Festbord und an seiner anderen Axialseite einen nach dem Einsetzen des Nadelkranzes angeformten, radial nach innen gerichteten Bördelbord auf, durch welche der Nadelkranz im Außenring gehalten wird. Zwischen diesen Borden und dem Nadelkranz sind darüber hinaus beidseitig eine oder mehrere Dichtungen angeordnet, durch die das Drosselklappenlager gegen das Durchströmen von Abgaskondensaten abgedichtet ist.

Bei neuen Motorengenerationen der Schadstoffklassen EU 5/US 7 hat es sich unter dauerhaften Betriebsbedingungen jedoch gezeigt, dass die Drosselklappenlager solcher Regeleinrichtungen mit zunehmenden Mengen von sogenannten Blow-by-Gasen einer entsprechend erhöhten Menge an Abgaskondensaten ausgesetzt sind, die über die Gehäusebohrungen für die Drosselklappenwelle zu den Drosselklappenlagern vordringen. Diese Abgaskondensate haben eine ölig-wässrige bis wässrig-saure Zusammensetzung, so dass die in der Regel aus einem gehärteten Wälzlagerstahl mit geringen Legierungs- und Kohlenstoffanteilen bestehenden Nadelhülsen der Drosselklappenlager zunächst verstärkten Angriffen von äußerer Korrosion unterliegen, die sich trotz der Mehrfachabdichtung der Drosselklappenlager auch bis in deren Inneres fortsetzt. Dabei bildet das Kondensat zunächst an den äußeren Borden der Nadelhülsen eine Rostschicht, die sich über deren herstellungsbedingte Schnittkanten bis ins Innere der Nadelhülsen ausbreitet und bis zu den Dichtungen der Drosselklappenlager fortschreitet. Mit weiterem Fortschreiten der Korrosion kommt es dann zu Rostunterwanderungen der Dichtungen, in deren Folge es zu Beschädigungen und zum Ausfall der Drosselklappenlager verbunden mit dem Funktionsausfall der Drosselklappe kommt.

Eine erste Gegenmaßnahme, die Korrosion der Drosselklappenlager durch eine korrosionshemmende Zink-Eisen-Beschichtung der Außenringe, wie beispielsweise durch Corrotect^{®}, zu vermeiden, hat sich bisher als ungeeignet erwiesen, da das säurehaltige Kondensat der Abgase das Zink der Zink-Eisen-Beschichtung anlöst und somit deren den Korrosionsschutz bewirkende opferanodische Wirkung verloren geht. Mit einer anderen, in der WO 2009/103 378 A1 vorgeschlagenen Gegenmaßnahme, die Nadelhülsen beider Drosselklappenlager aus einem hochlegierten korrosionsbeständigen Stahlblech ohne weitere Wärme- und/oder Oberflächenbehandlung durch Tiefziehen herzustellen, ist zwar der angestrebte Erfolg erzielt worden, jedoch hat sich diese Maßnahme aufgrund des durch einen solchen Werkstoff notwendigen erhöhten Fertigungs- und Vorrichtungsaufwandes insgesamt als unwirtschaftlich erwiesen.

### Aufgabe der Erfindung

Ausgehend von den dargelegten Nachteilen der Lösungen des bekannten Standes der Technik liegt der Erfindung deshalb die Aufgabe zu Grunde, eine Nadelhülse, insbesondere zur Schwenklagerung der Drosselklappenwelle einer Regeleinrichtung zur Abgasrückführung an Brennkraftmaschinen zu konzipieren, die einen sicheren Korrosionsschutz gegen Abgaskondensate gewährleistet und sich zugleich durch eine kostengünstige Herstellbarkeit auszeichnet.

### Beschreibung der Erfindung

Erfindungsgemäß wird diese Aufgabe bei einer Nadelhülse nach dem Oberbegriff des Anspruchs 1 derart gelöst, dass der Außenring der Nadelhülse als bordlose Zylinderhülse ausgebildet ist und die Dichtungen der Nadelhülse durch zwei zumindest teilweise außerhalb des Außenrings angeordnete und auf dessen Axialkanten aufgepresste Lippendichtringe mit einem S-förmigen Querschnittsprofil gebildet werden, die zugleich als die den Nadelkranz im Außenring haltende, radial nach innen gerichtete Borde der Nadelhülse ausgebildet sind und durch welche die Nadelhülse sowohl statisch zu einem diese umschließenden Gehäuse als auch dynamisch gegen das Durchströmen von Abgaskondensaten abdichtbar ist.

Bevorzugte Ausgestaltungen und vorteilhafte Weiterbildungen der erfindungsgemäß ausgebildeten Nadelhülse werden in den Unteransprüchen beschrieben.

Danach ist es gemäß Anspruch 2 bei der erfindungsgemäß ausgebildeten Nadelhülse vorgesehen, dass der Außenring der Nadelhülse entweder als aus einer Platine tiefgezogene, geschlossene Zylinderhülse oder als aus einem Metallbandstreifen rollierte, geschlitzte Zylinderhülse ausgebildet ist. Bei der geschlossenen Zylinderhülse ist dabei das Ausgangsmaterial eine aus einem Metallbandmaterial ausgestanzte runde Platine, die in mehreren Tiefziehschritten zunächst zu einer Tassenform umgeformt wird und deren hohlzylindrische Endform dann einerseits durch Ausstanzen des Tassenbodens und andererseits durch Abrissbeschneiden hergestellt wird. Bei der geschlitzten Zylinderhülse ist dagegen das Ausgangsmaterial ein von einem Metallbandmaterial abgelängter flacher Streifen, an dessen Enden ein für ein gleichmäßiges Überrollen der Lagernadeln günstiger Diagonal- oder Pfeilstoß angeformt wird und deren zylindrische Endform dann durch Rollieren bzw. Rundbiegen hergestellt wird. Beide genannte Fertigungsverfahren sind den spanlosen Herstellungsverfahren zuzuordnen, die sich bekanntermaßen durch eine hohe Wirtschaftlichkeit auszeichnen. Da bei der erfindungsgemäß ausgebildeten Nadelhülse mit bordlosem Außenring zusätzlich der Fertigungsschritt des Bördelns und des vorherigen Anlassens eingespart werden kann, ist somit insgesamt eine äußerst kostengünstige Herstellung der Nadelhülse möglich.

Nach Anspruch 3 ist es ein weiteres Merkmal der erfindungsgemäß ausgebildeten Nadelhülse, dass die Axialkanten des Außenrings gegenüber der übrigen Materialstärke des Außenrings eine verringerte Materialstärke aufweisen und gegenüber der Lagerquerachse in einem Winkel radial nach außen angestellt sind. In konkreter Ausführung bedeutet dies, dass die Axialkanten des Außenrings derart profiliert werden, dass diese zur Außenmantelfläche des Außenrings stufenförmig abgesetzte sowie von der Innenmantelfläche des Außenrings radial schräg angestellte Endstege bilden, auf welche die S-profilförmigen Dichtungen der Nadelhülse so aufgesteckt werden können, dass die Außenmantelflächen der Dichtungen und die Außenmantelfläche der Nadelhülse annähernd in einer Ebene angeordnet sind. Die derart ausgebildeten Axialkanten des Außenrings bewirken somit, dass den Dichtungen zum einen ausreichend Bauraum für eine Mindestmaterialstärke ihres radial äußeren Profilschenkels zur Verfügung steht und dass diese zum anderen die Montage der Nadelhülse im Drosselklappengehäuse nicht behindern.

Für eine zuverlässige statische Abdichtung der Nadelhülse zum Drosselklappengehäuse hat es sich dennoch als vorteilhaft erwiesen, wenn die Dichtungen, wie in Anspruch 4 vorgeschlagen, jeweils einen gegenüber dem Außendurchmesser des Außenrings geringfügig größeren Durchmesser an ihren Außenmantelflächen aufweisen. Da die Dichtungen vorteilhafterweise aus einem Elastomer bestehen, wird dieser vergrößerte Außendurchmesser beim Einführen der Nadelhülse in die Bohrung der Drosselklappenwelle auf den Bohrungsdurchmesser komprimiert und bewirkt dann in Endstellung der Nadelhülse eine erhöhte statische Dichtkraft. Eine weitere Erhöhung der statischen Dichtkraft der Dichtungen kann darüber hinaus nach den Ansprüchen 5 und 6 dadurch erzielt werden, wenn die Dichtungen an ihren Außenmantelflächen zusätzlich entweder mit einer umlaufenden Rillierung bzw. mehreren kleineren Sicken oder mit jeweils einer umlaufenden Ringwulst und an ihren zu den Axialkanten der der Nadelhülse weisenden Innenflächen mit jeweils einer weiteren umlaufenden Ringwulst ausgebildet sind. Durch die umlaufend Ringwulst an den zu den Axialkanten der der Nadelhülse weisenden Innenflächen kann dabei im Zusammenwirken mit der Rillierung und der Ringwulst an deren Außenmantelflächen erreicht werden, dass die erhöhte Dichtkraft direkt zwischen diesen Axialkanten und der Bohrung der Drosselklappenwelle wirkt und somit zuverlässig das Eindringen von Abgaskondensaten in die Nadelhülse verhindert.

Durch Anspruch 7 wird es als vorteilhafte Ausgestaltung der erfindungsgemäß ausgebildeten Nadelhülse schließlich noch vorgeschlagen, dass die Dichtungen zur dynamischen Abdichtung gegen das Durchströmen von Abgaskondensaten an ihrer Innenmantelflächen zumindest mit jeweils einer schräg nach außen angestellten und radial nach innen wirkenden, elastischen Dichtlippe ausgebildet sind. Die schräg nach außen angestellten Dichtlippen beider Dichtungen bewirken dabei, dass diese sich an den Druck der anströmenden Abgaskondensate anpassen können und bei erhöhtem Druck auch mit einer höheren Dichtkraft auf die Drosselklappenwelle wirken. Die Innenseiten dieser Dichtlippen bilden dabei gleichzeitig die radial nach innen gerichteten Borde der Nadelhülse, die den Nadelkranz im Außenring halten, wobei der Gefahr eines durch Reibung zwischen dem Nadelkranz und den Dichtungen entstehenden erhöhten Verschleißes der Dichtungen durch eine metallische Armierung in den Dichtungen begegnet werden kann, die an den Kontaktstellen zum Nadelkranz nicht mit Elastomer umspritzt ist und zugleich der Versteifung der Dichtungen dient.

Zusammenfassend weist die erfindungsgemäß ausgebildete Nadelhülse somit gegenüber den aus dem Stand der Technik bekannten Nadelhülsen den Vorteil auf, dass diese durch die bordlose Ausführung und vereinfachte spanlose Fertigung des Außenringes wesentlich kostengünstiger hergestellt werden kann. Gleichzeitig weist die erfindungsgemäß ausgebildete Nadelhülse durch die außerhalb des Außenrings angeordneten S-profilförmigen Dichtungen einen wesentlich verbesserten Schutz gegen Korrosion durch Abgaskondensate auf, da diese Dichtungen die Schnittkanten des Außenrings umschließen und dem Abgaskondensat somit keine Angriffsflächen mehr für Rostbildung bieten. Zusätzlich bilden die Dichtungen zugleich die den Nadelkranz im Außenring haltenden, radial nach innen gerichteten Borde der Nadelhülse und dienen bei der geschlitzten Ausführung des Außenrings gleichzeitig noch als Bandage zum Zusammenhalten der Enden des Außenrings.

### Kurze Beschreibung der Zeichnungen

Die erfindungsgemäß ausgebildete Nadelhülse wird nachfolgend in zwei bevorzugten Ausführungsformen unter Bezugnahme auf die beigefügten Zeichnungen näher erläutert. Dabei zeigen:
- Figur 1: einen Querschnittes durch eine erste Ausführungsform der erfindungsgemäß ausgebildeten Nadelhülse;
- Figur 2: einen Querschnittes durch eine zweite Ausführungsform der erfindungsgemäß ausgebildeten Nadelhülse;
- Figur 3: eine vergrößerte Darstellung der Einzelheit X gemäß Figur 1 mit einer ersten Variante einer Dichtungsausführung;
- Figur 4: eine vergrößerte Darstellung der Einzelheit X gemäß Figur 1 mit einer zweiten Variante einer Dichtungsausführung.

### Ausführliche Beschreibung der Zeichnungen

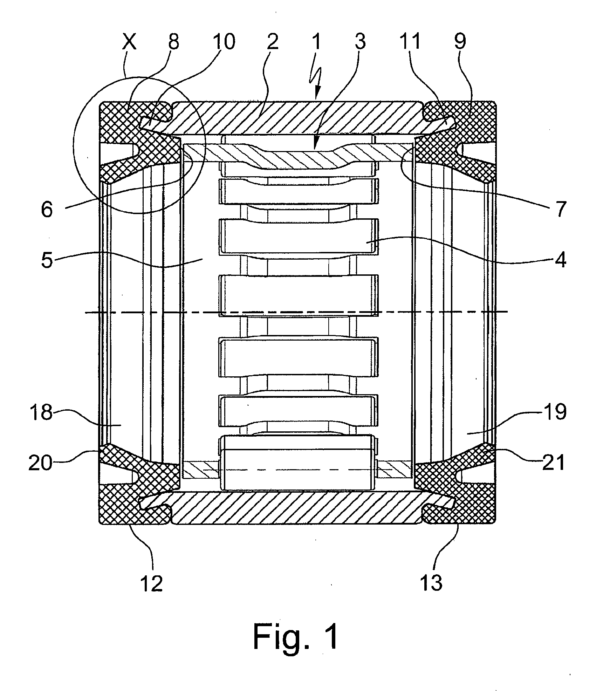

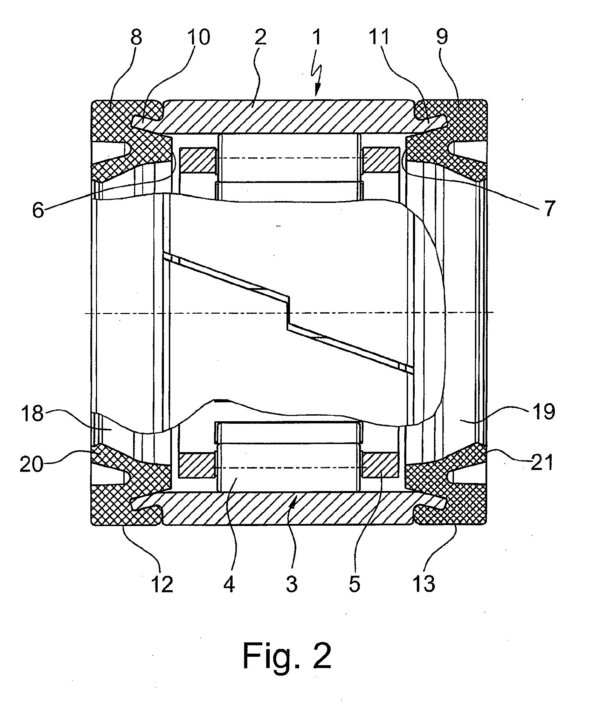

Aus den Figuren 1 und 2 geht jeweils eine zur Schwenklagerung der Drosselklappenwelle einer Regeleinrichtung zur Abgasrückführung an Brennkraftmaschinen geeignete Nadelhülse 1 hervor, welche im Wesentlichen aus einem dünnwandigen, spanlos geformten Außenring 2 sowie aus einem in diesen Außenring 2 eingesetzten Nadelkranz 3 besteht, der durch eine Vielzahl von Lagernadeln 4 sowie einem die Lagernadeln 4 in Umfangsrichtung in gleichmäßigen Abständen führenden Nadelkäfig 5 gebildet wird.

Desweiteren ist aus den Figuren 1 und 2 deutlich ersichtlich, dass der Außenring 2 der Nadelhülse 1 erfindungsgemäß als bordlose Zylinderhülse ausgebildet ist und dass jede Nadelhülse 1 mit zwei Dichtungen 8, 9 ausgebildet ist, die erfindungsgemäß durch zumindest teilweise außerhalb des Außenrings 2 angeordnete und auf dessen Axialkanten 10, 11 aufgepresste Lippendichtringe mit einem S-förmigen Querschnittsprofil gebildet werden. Darüber hinaus sind die Dichtungen 8, 9 zugleich als den Nadelkranz 3 im Außenring 2 haltende, radial nach innen gerichtete Borde 6, 7 der Nadelhülse 1 ausgebildet, durch welche die Nadelhülse 1 sowohl statisch zu einem diese umschließenden Gehäuse als auch dynamisch gegen das Durchströmen von Abgaskondensaten abdichtbar ist.

Ebenso ist in Figur 1 zu sehen, dass der Außenring 2 der Nadelhülse 1 in einer ersten bevorzugten Ausführungsform als aus einer Platine tiefgezogene, geschlossene Zylinderhülse ausgebildet ist, bei der das Ausgangsmaterial eine aus einem Metallbandmaterial ausgestanzte runde Platine ist, die in mehreren Tiefziehschritten zunächst zu einer Tassenform umgeformt wird und deren hohlzylindrische Endform dann einerseits durch Ausstanzen des Tassenbodens und andererseits durch Abrissbeschneiden hergestellt wird.

Bei der in Figur 2 gezeigten zweiten bevorzugten Ausführungsform ist der Außenring 2 der Nadelhülse 1 dagegen als aus einem Metallbandstreifen rollierte, geschlitzte Zylinderhülse ausgebildet, bei der das Ausgangsmaterial ein von einem Metallbandmaterial abgelängter flacher Streifen ist, an dessen Enden ein für ein gleichmäßiges Überrollen der Lagernadeln günstiger Pfeilstoß der in der Zeichnung angedeuteten Art angeformt wird und deren hohlzylindrische Endform dann durch Rundbiegen hergestellt wird.

Weiterhin geht aus den Figuren 1 und 2 noch hervor, dass die Axialkanten 10 11 des Außenrings 2 gegenüber der übrigen Materialstärke des Außenrings 2 eine verringerte Materialstärke aufweisen und gegenüber der nicht dargestellten Lagerquerachse in einem Winkel radial nach außen angestellt sind. Das bedeutet, dass die Axialkanten 10, 11 des Außenrings 2 derart profiliert sind, dass diese zur Außenmantelfläche des Außenrings 2 stufenförmig abgesetzte sowie von der Innenmantelfläche des Außenrings 2 radial schräg angestellte Endstege bilden, auf welche die S-profilförmigen Dichtungen 8, 9 der Nadelhülse 1 so aufgesteckt werden können, dass die Außenmantelflächen 12, 13 der Dichtungen 8, 9 und die Außenmantelfläche des Außenrings 2 annähernd in einer Ebene angeordnet sind.

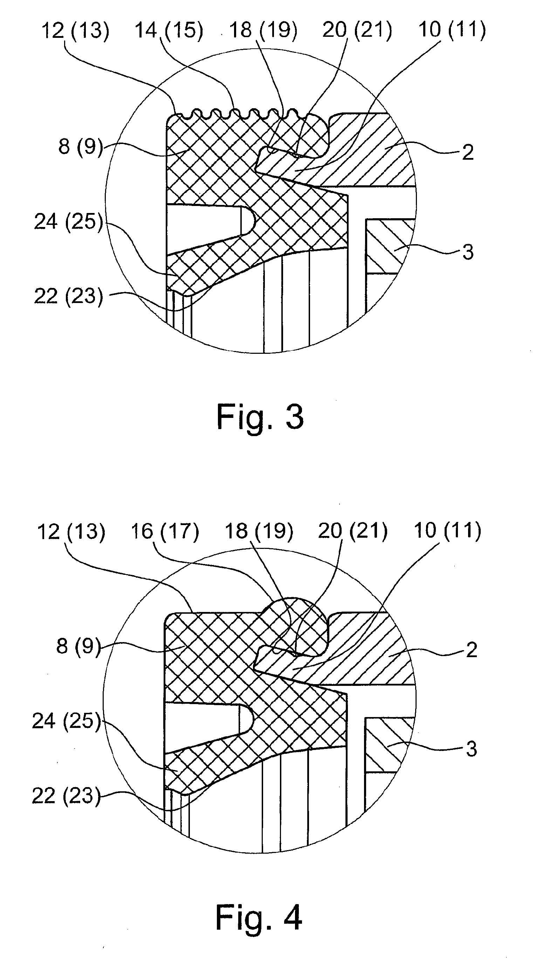

Für eine zuverlässige statische Abdichtung der Nadelhülse 1 zu einem nicht dargestellten Gehäuse ist es dennoch vorteilhaft, wenn die Dichtungen 8, 9, wie den Figuren 1 und 2 lediglich andeutungsweise entnehmbar ist, jeweils einen gegenüber dem Außendurchmesser des Außenrings 2 geringfügig größeren Durchmesser an ihren Außenmantelflächen aufweisen. Eine Erhöhung der statischen Dichtkraft der Dichtungen 8, 9 kann jedoch dadurch erzielt werden, wenn die Dichtungen an ihren Außenmantelflächen 12, 13 zusätzlich entweder, wie in Figur 3 abgebildet, mit einer umlaufenden Rillierung 14, 15 oder, wie in Figur 4 dargestellt, mit einer umlaufenden Ringwulst 16, 17 ausgebildet sind und dabei an ihren zu den Axialkanten 10, 11 der der Nadelhülse 1 weisenden Innenflächen 18, 19 jeweils eine weitere, sowohl in Figur 3 und 4 sichtbare umlaufende Ringwulst 20, 21 angeordnet ist.

Schließlich ist aus den Figuren 1 und 2 sowie aus den vergrößerten Darstellungen der Figuren 3 und 4 noch ersichtlich, dass die Dichtungen 8, 9 zur dynamischen Abdichtung gegen das Durchströmen von Abgaskondensaten an ihrer Innenmantelflächen 22, 23 mit jeweils einer schräg nach außen angestellten und radial nach innen wirkenden, elastischen Dichtlippe 24, 25 ausgebildet sind, deren schräge Anstellung nach außen bewirkt, dass diese sich an den Druck der anströmenden Abgaskondensate anpassen können und bei erhöhtem Druck auch mit einer höheren Dichtkraft auf die Drosselklappenwelle wirken.

### Bezugszahlenliste

- 1: Nadelhülse
- 2: Außenring
- 3: Nadelkranz
- 4: Lagernadeln
- 5: Nadelkäfig
- 6: Bord
- 7: Bord
- 8: Dichtung
- 9: Dichtung
- 10: Axialkante
- 11: Axialkante
- 12: Außenmantelfläche von 8
- 13: Außenmantelfläche von 9
- 14: Rillierung an 12
- 15: Rillierung an 13
- 16: Ringwulst an 12
- 17: Ringwulst an 13
- 18: Innenfläche von 8
- 19: Innenfläche von 9
- 20: Ringwulst an 18
- 21: Ringwulst an 19
- 22: Innenmantelfläche von 8
- 23: Innenmantelfläche von 9
- 24: Dichtlippe an 22
- 25: Dichtlippe an 23

## Patentansprüche

1. Nadelhülse (1), insbesondere zur Schwenklagerung der Drosselklappenwelle einer Regeleinrichtung zur Abgasrückführung an Brennkraftmaschinen, im Wesentlichen bestehend aus einem dünnwandigen, spanlos geformten Außenring (2) sowie aus einem in diesen Außenring (2) eingesetzten Nadelkranz (3), der durch eine Vielzahl von Lagernadeln (4) sowie einem die Lagernadeln (4) in Umfangsrichtung in gleichmäßigen Abständen führenden Nadelkäfig (5) gebildet wird, wobei die Nadelhülse (1) an ihren Axialseiten zwei radial nach innen gerichtete, den Nadelkranz (3) im Außenring (2) haltende Borde (6, 7) aufweist und mit mehreren Dichtungen (8, 9) ausgebildet ist, durch die diese gegen das Durchströmen von Abgaskondensaten abgedichtet ist, **dadurch gekennzeichnet, dass** der Außenring (2) der Nadelhülse (1) als bordlose Zylinderhülse ausgebildet ist und die Dichtungen (8, 9) der Nadelhülse (1) durch zwei zumindest teilweise außerhalb des Außenrings (2) angeordnete und auf dessen Axialkanten (10, 11) aufgepresste Lippendichtringe mit einem S-förmigen Querschnittsprofil gebildet werden, die zugleich als die den Nadelkranz (3) im Außenring (2) haltende, radial nach innen gerichtete Borde (6, 7) der Nadelhülse (1) ausgebildet sind und durch welche die Nadelhülse (1) sowohl statisch zu einem diese umschließenden Gehäuse als auch dynamisch gegen das Durchströmen von Abgaskondensaten abdichtbar ist.

2. Nadelhülse nach Anspruch 1, **dadurch gekennzeichnet, dass** der Außenring (2) der Nadelhülse (1) entweder als aus einer Platine tiefgezogene, geschlossene Zylinderhülse oder als aus einem Metallbandstreifen rollierte, geschlitzte Zylinderhülse ausgebildet ist.

3. Nadelhülse nach Anspruch 1, **dadurch gekennzeichnet, dass** die Axialkanten des Außenrings (2) gegenüber der übrigen Materialstärke des Außenrings (2) eine verringerte Materialstärke aufweisen und gegenüber der Lagerquerachse in einem Winkel radial nach außen angestellt sind.

4. Nadelhülse nach Anspruch 3, **dadurch gekennzeichnet, dass** die Dichtungen (8, 9) zur statischen Abdichtung jeweils einen gegenüber dem Außendurchmesser des Außenrings (2) geringfügig größeren Durchmesser an ihren Außenmantelflächen (12, 13) aufweisen.

5. Nadelhülse nach Anspruch 4, **dadurch gekennzeichnet, dass** die Dichtungen (8, 9) zur Erhöhung ihrer statischen Dichtkraft an ihren Außenmantelflächen (12, 13) zusätzlich entweder mit einer umlaufenden Rillierung (14, 15) oder mit einer umlaufenden Ringwulst (16, 17) ausgebildet sind.

6. Nadelhülse nach Anspruch 4, **dadurch gekennzeichnet, dass** die Dichtungen (8, 9) zur weiteren Erhöhung ihrer statischen Dichtkraft an ihren zu den Axialkanten der (10, 11) der Nadelhülse (1) weisenden Innenflächen (18, 19) mit einer weiteren umlaufenden Ringwulst (20, 21) ausgebildet sind.

7. Nadelhülse nach Anspruch 3, **dadurch gekennzeichnet, dass** die Dichtungen (8, 9) zur dynamischen Abdichtung an ihrer Innenmantelflächen (22, 23) zumindest mit jeweils einer schräg nach außen angestellten und radial nach innen wirkenden, elastischen Dichtlippe (24, 25) ausgebildet sind.

## Claims

1. Needle sleeve (1), in particular for pivotably mounting the throttle valve shaft of a control device for recirculating exhaust gas in internal combustion engines, essentially consisting of a thin-walled outer ring (2) formed in a non-cutting manner and of a needle rim (3) which is inserted into this outer ring (2) and which is formed by a multiplicity of bearing needles (4) and a needle cage (5) guiding the beating needles (4) at uniform intervals in the circumferential direction, the needle sleeve (1) having on its axial sides two radially inward-directed flanges (6, 7) holding the needle rim (3) in the outer ring (2), and being designed with a plurality of seals (8, 9), by means of which the said needle sleeve is sealed off against the throughflow of exhaust gas condensates, **characterized in that** the outer ring (2) of the needle sleeve (1) is designed as a flangeless cylindrical sleeve and the seals (8, 9) of the needle sleeve (1) are formed by two lip sealing rings with an S-shaped cross-sectional profile, which are arranged at least partially outside the outer ring (2) and are pressed onto the axial edges (10, 11) of the latter and which at the same time are designed as the radially inward-directed flanges (6, 7), holding the needle rim (3) in the outer ring (2), of the needle sleeve (1) and by means of which the needle sleeve (1) can be sealed off both statically with respect to a housing surrounding it and dynamically against the throughflow of exhaust gas condensates.

2. Needle sleeve according to Claim 1, **characterized in that** the outer ring (2) of the needle sleeve (1) is formed either as a closed cylindrical sleeve deep-drawn out of a sheet metal blank or as a slotted cylindrical sleeve rolled out of a metal ribbon strip.

3. Needle sleeve according to Claim 1, **characterized in that** the axial edges of the outer ring (2) have reduced material thickness in comparison with the remaining material thickness of the outer ring (2) and are set radially outwards at an angle with respect to the bearing transverse axis.

4. Needle sleeve according to Claim 3, **characterized in that** the seals (8, 9) have, for static sealing-off, on each of their outer surface areas (12, 13) a diameter which is slightly larger than the outside diameter of the outer ring (2).

5. Needle sleeve according to Claim 4, **characterized in that** the seals (8, 9), to increase their static sealing force, are additionally formed on their outer surface areas (12, 13) either with a peripheral grooving (14, 15) of with a peripheral annular bead (16, 17).

6. Needle sleeve according to Claim 4, **characterized in that** the seals (8, 9), for a further increase in their static sealing force, are formed with a further peripheral annular bead (20, 21) on their inner faces (18, 19) pointing towards the axial edges (10, 11) of the needle sleeve (1).

7. Needle sleeve according to Claim 3, **characterized in that** the seals (8, 9), for dynamic sealing-off, are formed on their inner surface areas (22, 23) at least each with an elastic sealing lip (24, 25) which is set obliquely outwards and acts radially inwards.

## Revendications

1. Douille à aiguilles (1) en particulier pour le support sur palier pivotant de l'arbre de papillon d'un dispositif de réglage destiné au recyclage des gaz d'échappement de moteurs à combustion interne, constituée essentiellement d'une bague extérieure (2) à paroi mince, formée sans usinage par enlèvement de copeaux, ainsi que d'une couronne d'aiguilles (3) insérée dans cette bague extérieure (2), laquelle est formée par une pluralité d'aiguilles de palier (4) et par une cage d'aiguilles (5) guidant les aiguilles de palier (4) dans la direction périphérique avec des espacements réguliers, la douille à aiguilles (1) présentant, au niveau de ses côtés axiaux, deux bords (6, 7) orientés radialement vers l'intérieur, retenant la couronne d'aiguilles (3) dans la bague extérieure (2) et étant réalisée avec plusieurs joints d'étanchéité (8, 9) qui réalisent l'étanchéité de la douille à aiguilles vis-à-vis de l'écoulement de condensats de gaz d'échappement, **caractérisée en ce que** la bague extérieure (2) de la douille à aiguilles (1) est réalisée sous forme de douille cylindrique sans bord et les joints d'étanchéité (8, 9) de la douille à aiguilles (1) sont formés par deux bagues d'étanchéité à lèvre disposées au moins en partie à l'extérieur de la bague extérieure (2) et pressées sur ses arêtes axiales (10, 11), avec un profilé en forme de S en section transversale, lesquelles bagues d'étanchéité à lèvre sont en même temps réalisées sous la forme des bords (6, 7) de la douille à aiguilles (1) retenant la couronne d'aiguilles (3) dans la bague extérieure (2) et orientés radialement vers l'intérieur, et par le biais desquelles bagues d'étanchéité à lèvre la douille à aiguilles (1) peut être étanchéifiée à la fois statiquement par rapport à un boîtier qui l'entoure et dynamiquement par rapport à l'écoulement de condensats de gaz d'échappement.

2. Douille à aiguilles selon la revendication 1, **caractérisée en ce que** la bague extérieure (2) de la douille à aiguilles (1) est réalisée soit sous la forme d'une douille cylindrique fermée, emboutie profond à partir d'une platine, ou sous la forme d'une douille cylindrique fendue, laminée à partir d'une bande de feuillard métallique.

3. Douille à aiguilles selon la revendication 1, **caractérisée en ce que** les arêtes axiales de la bague extérieure (2) présentent une épaisseur de matériau réduite par rapport au reste de l'épaisseur de matériau de la bague extérieure (2) et sont inclinées suivant un certain angle radialement vers l'extérieur par rapport à l'axe transversal du palier.

4. Douille à aiguilles selon la revendication 3, **caractérisée en ce que** les joints d'étanchéité (8, 9) présentent, pour l'étanchéité statique, à chaque fois un diamètre légèrement plus grand au niveau de leurs surfaces d'enveloppe extérieure (12, 13) par rapport au diamètre extérieur de la bague extérieure (2).

5. Douille à aiguilles selon la revendication 4, **caractérisée en ce que** les joints d'étanchéité (8, 9), pour augmenter leur force d'étanchéité statique, sont réalisés au niveau de leurs surfaces d'enveloppe extérieure (12, 13) en outre soit avec un rainurage périphérique (14, 15) soit avec un bourrelet annulaire périphérique (16, 17).

6. Douille à aiguilles selon la revendication 4, **caractérisée en ce que** les joints d'étanchéité (8, 9), en vue d'une augmentation supplémentaire de leur force d'étanchéité statique, sont réalisés, au niveau de leurs surfaces intérieures (18, 19) tournées vers les arêtes axiales (10, 11) de la douille à aiguilles (1), avec un bourrelet périphérique annulaire supplémentaire (20, 21).

7. Douille à aiguilles selon la revendication 3, **caractérisée en ce que** les joints d'étanchéité (8, 9), en vue de l'étanchéité dynamique, sont réalisés au niveau de leurs surfaces d'enveloppe intérieure (22, 23) au moins avec à chaque fois une lèvre d'étanchéité élastique (24, 25), inclinée obliquement vers l'extérieur et agissant radialement vers l'intérieur.
